# EUROPEAN PATENT APPLICATION

(11) **EP 2 672 666 A1**
(43) Date of publication of application: **11.12.2013**
(21) Application number: 12170884.6
(22) Date of filing: 05.06.2012
(51) Int. Cl.: H04L 12/58

(54) **Sending and receiving a message including a personalized alert notification chosen by the sender**

(71) Applicant: GAM System B.V., 3021 AE Rotterdam (NL)
(72) Inventor: Hendriksen, Igor Alexander Rejna, 3021 DM Rotterdam (NL); Carpenter, Brendon Andrew, 3021 DM Rotterdam (NL); Martins, Jorge Reis, 3021 DM Rotterdam (NL); van Noorloos, Naomi, 3021 DM Rotterdam (NL); van der Goes, Vincentius Johannes Leonardus, 3021 DM Rotterdam (NL)
(74) Representative: Nederlandsch Octrooibureau

(57) **Abstract**

A message reception system (1) for alerting a user of an incoming message from another user comprises a message receiving unit (2) for receiving a message (200) via a network connection. A detecting unit (3) is arranged for detecting an indication (203) of a data object (306) comprising an audio track in the message (200) automatically in response to receiving the message (200. A play unit (4) is arranged for causing the audio track to be played automatically in response to detecting the indication (203) in the message (200). A message transmission system (50) for sending a message to a message reception system (1), comprises a selection unit (51) for enabling a user to select a data object comprising an audio track to be played by a message reception system (1) of a destination user upon reception of the message by the message reception system (1).

## Description

### FIELD OF THE INVENTION

The invention relates to alerting a user of an incoming message. The invention further relates to instant messaging. The invention further relates to sending a message from one user to another user. The invention further relates to receiving a message from another user.

### BACKGROUND OF THE INVENTION

In modem telecommunication, users have many different means of communication at their disposal, including landline and mobile telephones, and internet-enabled devices such as personal computers and mobile terminals, including mobile telephones. These devices may be connected to a telephony network and/or to the Internet, to provide a communications service such as a voice call service, a short message service (SMS), e-mail, and/or an instant messaging service. A user of such a service may initiate a communication to another user by making a call or sending a message. Instant messaging applications allow a user to type a message and send it to one or more selected users' devices. These receiving devices may be configured to alert the user of an incoming message by displaying a notice on the display of the device. Moreover, the receiving device may be configured to produce an audible signal to alert the user of an incoming communication.

US 2008/0040227 discloses a communication system that provides a text-to-speech server that communicates with an animation or face server to compute and synchronize an animated message of the spoken text that can be streamed to a recipient.

### SUMMARY OF THE INVENTION

An object is to provide an improved alert of an incoming message in an instant user communication system, such as an instant messaging system or a telephone system.

In a first aspect, the invention provides a communication system for alerting a user of an incoming message from another user, comprising
a message receiving unit for receiving a message via a network connection;
a detecting unit for detecting an indication of a data object comprising an audio track in the message automatically in response to receiving the message; and
a play unit for causing the audio track to be played automatically in response to detecting the indication.

By playing back the audio track that is indicated in the message, the sending user is enabled to select a sound track that should be used to alert the receiving user. This way, a sound that is appropriate for the context of the message may be selected by the user or the device that transmits the message. The system may help the user to better convey his or her emotion when transmitting the message, or it may help to alert the receiver of the message in a more appropriate way. Moreover, it can increase the joy of using the communication system.

The communication system may comprise an instant messaging system, and the message may comprise an instant message from a user of a remote device. The instant messaging application, thus produces the sound that is indicated in the received instant message. This allows to generate a more appropriate alert to be produced at the receiver depending on the desires of the transmitter.

The system may comprise a message display unit for displaying the instant message. This way, the instant message may be displayed on the display unit, while the audio track is played. This improves the user experience.

The play unit may be arranged for playing the audio track upon reception of the message and detection of the indication, regardless of whether the instant message is being displayed at that time. Some instant messaging applications can be run in a background mode, in which a message that is received is not shown until the user of the receiving device requests the message to be displayed. However, the system may be arranged for playing the audio track anyway. This allows the user of the receiving device to be alerted in a more creative way than in existing messaging systems.

The incoming communication may comprise an incoming call. For example, the message comprises a signal notifying the receiving device of the incoming call. This allows the audio track, which is indicated by the received message, to replace a ringtone of the receiving device, just for this call. Alternatively, the audio track may be played in addition to a ringtone of the receiving device.

The alert unit may be arranged for overriding a stand-by mode or a background mode of the system to play the audio track. Current communication devices may have many different functions and applications running thereon. Consequently, it is possible that the application of the communication system is not running in foreground. Moreover, the device may be operative in a stand-by or idle mode. In such a case, the communication system may still be capable of receiving the incoming message, and play the audio track indicated therein, so that the user is notified in a flexible way also when the communication system is running in a background mode.

The data object may comprise a video track. The play unit may be arranged for, automatically in response to detecting the indication, causing the video track to be played. This may provide a further enhancement to the system, in that the audio track may be complemented with a video track. In such a case, the video and audio may be played back automatically upon reception of the message.

The indication of the data object may comprise a reference to a remotely hosted object. The system may comprise a stream unit for streaming the remotely hosted object from a remote host based on the reference, in response to receiving the message and detecting the indication, for playback by the play unit. This allows the message to be small in size. Moreover, it is not necessary to transfer the data object from the sending device, which may save mobile data communication from the sending device to the mobile network, for example. Moreover, the audio track does not need to be stored at the sending device. Moreover, this allows the data object to be streamed from the remote host, which may allow the playback of the audio track to be started more quickly.

Another aspect of the invention provides a communication system for sending a message from one user to another user, comprising
an indication unit for enabling a user to select a data object comprising an audio track;
a message generator for generating a message comprising an indication of the data object and a request to play the audio track at the destination upon reception of the message by the remote device; and
a transmission unit for transmitting the message to the remote device via a network.

This allows a user who transmits a message to another user to choose an audio track to be played at the receiving user. This way, it provides an enhancement to existing communication systems.

The communication system may comprise a text unit for enabling a user to indicate text to be displayed by the remote device, and wherein the message generator is arranged for including the text in the message. This way, the system extends a text messaging system with the ability to let the sending user choose an alerting sound to be played back at the receiving device.

The communication system may comprise a call unit for enabling a user to indicate initiation of a voice and/or video call with the remote device, and wherein the message generator is arranged for including a call request in the message. This way, the system allows a user to generate a special sound at the receiving device for a phone call.

The message generator may be arranged for including the indication of the data object as a reference to a remotely hosted object. This way, the sending communication system does not need to be responsible for transmitting the data object, because this can be done by a remote host.

The indication unit may be arranged for enabling the user to select the data object from a predefined collection of data objects. For example, the user may be presented with a list of data objects, and allow the user to choose one.

The receiving communication system and the transmitting communication system may be integrated in a single device, to allow both incoming and outgoing messages.

Another aspect of the invention provides a method of alerting a user of an incoming message from another user, comprising
receiving a message via a network connection;
detecting an indication of a data object comprising an audio track in the message automatically in response to receiving the message; and
causing the audio track to be played automatically in response to detecting the indication.

Another aspect of the invention provides a method of sending a message from one user to another user, comprising enabling a user to select a data object comprising an audio track;
generating a message comprising an indication of the data object and a request to play the audio track to the user upon reception of the message by a remote device; and transmitting the message to the remote device via a network.

Another aspect of the invention provides a computer program product comprising instructions for causing a processor system to perform at least one of the methods set forth.

The person skilled in the art will understand that the features described above may be combined in any way deemed useful. Moreover, modifications and variations described herein in respect of the system may likewise be applied to the method and to the computer program product, and modifications and variations described herein in respect of the method may likewise be applied to the system and to the computer program product.

### BRIEF DESCRIPTION OF THE DRAWINGS

In the following, aspects of the invention will be elucidated by means of examples, with reference to the drawings. The drawings are diagrammatic and may not be drawn to scale. Throughout the drawings, similar items have been indicated by means of the same reference numerals.
Fig. 1 is a block diagram of a communication system.
Fig. 2 is a diagram of a message structure.
Fig. 3 is a diagram of a server system.
Fig. 4 is a flowchart of a communication method.

### DETAILED DESCRIPTION OF EMBODIMENTS

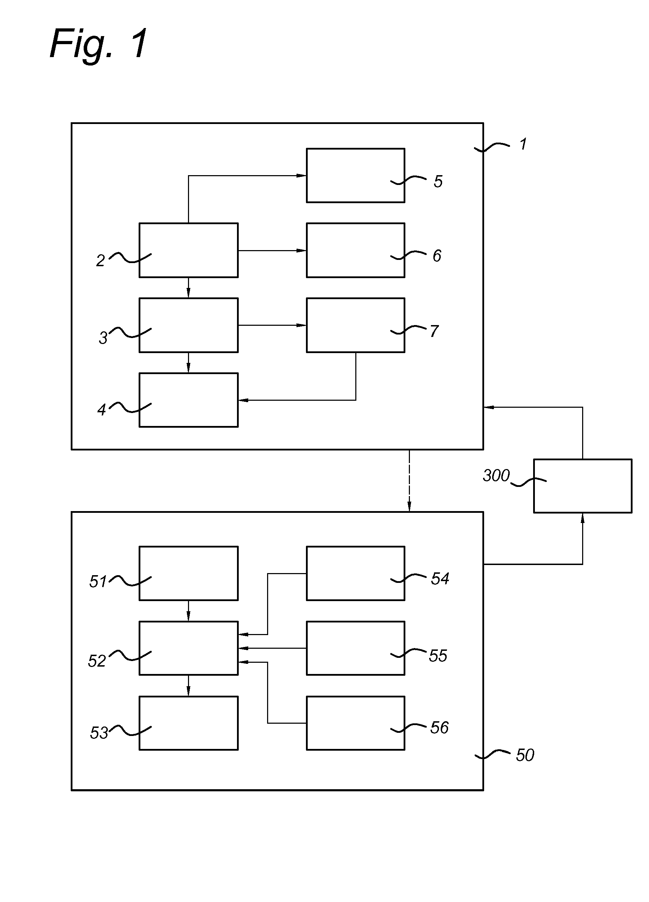

Fig. 1 illustrates aspects of a communication system. The system comprises a server system 300, a message transmission system 50, and a message reception system 1. In typical configurations, a user's client device comprises both a message transmitting system 50 and a message reception system 1. These systems 50 and 1 may be implemented in an instant messaging client application, for example. However, it is also possible that the systems 50 and 1 are built as separate applications that can be used independent of the other. Moreover, any of the components that are described herein as a software application may also be implemented by means of dedicated electronic circuitry. The server system 300 may typically be implemented on high-end server hardware in a server farm, for example. The message transmitting system 50 and the message reception system 1 may be arranged as subsystems of an end user device, such as a portable terminal or a personal computer.

The message transmission system 50 may be arranged for sending a message to a message reception system 1, whereas the message reception system 1 may be arranged for receiving the message from the message transmission system 50 and alerting a user of the message reception system about the arrival of the received message.

The message transmission system 50 may comprise a selection unit 51 for enabling a user to select a data object comprising an audio track to be played by a message reception system 1 of a destination user upon reception of the message by the message reception system 1. For example, the user may enter an identifier, such as a number, of the data object into the selection unit. Alternatively, the selection unit may be arranged for displaying a list of available data objects and allow the user to choose at least one of the available data objects. The selection unit 51 may store this list of available data objects locally, or may retrieve it from a configurable remote host or from the server system 300. The user may be informed explicitly (e.g. by means of a displayed text prompt) or implicitly (e.g. by means of an explanation in the user manual of the system 50, or by experience of the user with the system) that the audio track will be played back by the message reception system instantly.

The message transmission system 50 may comprise a destination unit 56 arranged for selecting a destination of the message. The destination may be defined in terms of a user identification, such as a user name or a telephone number, for example. It is also possible that the destination is defined in terms of a user equipment identifier and/or a network address. The destination unit 56 may be arranged for enabling the user to select the destination.

The message transmission system 50 may comprise a message generator 52 for generating a message 200 comprising an indication 203 of the data object 306. The message generator may be arranged for including metadata 201 into the message. The metadata 201 may comprise the identification of the destination provided by the destination unit 56. Further metadata 201 may be included into the message 200 by the message generator 52, such as an indication of the sender of the message, an urgency of the message, and a type of communication associated with the message, such as a telephone call request, a text message, a chat session invitation, a broadcast/multicast message, such as a safety warning issued by the authorities, and the like.

The transmitting system 50 may comprise a transmission unit 53 for transmitting the message 203 to the message reception system 1 of the destination user via a network. This transmission may be performed through a number of intermediate processing devices, such as a server system 300. However, it is also possible that the message 203 is transmitted directly from the message transmission system 50 to the message reception system 1 of the destination user.

The message transmission system 50 may comprise a text unit 54 for enabling a user to indicate a text message 202 to be displayed by the message reception system 1 of the destination user. The message generator 52 may be arranged for including the text message 202 into the message 200. Such a text unit 54 may be present, for example, in the case the message is an SMS message or an instant text message. The text unit 54 may allow the user to include graphical and/or animated objects, such as smileys, other emoticons, and/or animated smileys/emoticons, into the text message, as known in the art per se.

The message transmission system 50 may comprise a call unit 55 arranged for enabling a user to indicate initiation of a voice and/or video call with the message reception system 1. The message generator 52 may be arranged correspondingly for including an indication of a call request in the message. This call unit 55 may be present in addition to or instead of the text unit. Moreover, both these units may be absent in the system. It is also possible that the message contains the reference to the 203 data object 306 without any further text message or invitation. Generally, the identification of the sender may still be included in the message metadata 201, so that the recipient may be informed of who sent him or her a sound bite. It will be understood from the above that the presence of the text message 202 in the message 200 is optional.

The message generator 52 may be arranged for including the indication 203 of the data object 306 as a reference to a remotely hosted object 306. For example, this object 306 may be hosted by the server system 300. However, the remote host 306 could be any host on the network on which the data object is hosted. The reference may comprise an Internet web address, using hypertext transfer protocol (HTTP) notation. Alternatively, the reference may comprise any identifier of the data object that may be resolved by the remote host, such as the server system 300.

A server system 300 may be provided in the network, wherein the server system 300 may be arranged for acting as a gateway or an intermediary by forwarding messages transmitted from one user to another user. For example, the server system 300 keeps track of network addresses of currently logged in users, so that the message transmission system needs only to provide the user identification of the destination user and send the message to the server system 300, and the server system 300 may find the network address of the user corresponding to the destination user identification, and forward the message to that network address.

The message reception system 1 may comprise a message receiving unit 2 for receiving a message 200 via a network connection. The message receiving unit 2 may be arranged for communicating with the server system 300 for this purpose, or directly with the message transmission system 50.

The message reception system may comprise a detecting unit 3 for detecting an indication 203 of a data object 306 comprising an audio track in the message 200. The detecting unit 3 may be triggered to perform its detection task automatically in response to receiving the message 200 by the message receiving unit 2. Possible implementation examples of the indication 203 and the data object 306 have been provided hereinabove.

The message reception unit 1 may comprise a play unit 4 for causing the audio track to be played. The play unit 4 may be arranged for being triggered automatically by the detecting unit 3 in response to detecting the indication 203 in the message 200.

The message reception system 1 may be part of an instant messaging system.

The message 200 may comprise a text message 202 to be presented to a user of the message reception system. This text message 202 may have been entered by the user of the originating message transmission system 50. To present the text message, the message reception system may comprise a message display unit 5 arranged for displaying the text message 202. The display unit 5 may be arranged for displaying the text message 202 automatically in response to reception of the message 200 by the message receiving unit 2. Alternatively, the text message 202 may be displayed only when the user requests so.

The play unit 4 may be arranged for playing the audio track upon reception of the message 200 and detection of the indication 203, regardless of whether the text message 202 is being displayed at that time.

The message may represent an incoming call. The message receiving system may comprise a voice calling unit 6, to set up a voice call if the user accepts the call. Systems to set up a voice call are known in the art per se.

The play unit 4 may be arranged for overriding a stand-by mode or a background mode of the message reception system 1 to play the audio track. For example, even when running in the background or in a stand-by mode, the message receiving unit 2 may accept an incoming message, and trigger the detecting unit 3 and play unit 4.

The data object 306 may comprise a video track, and the play unit 4 may be arranged for, automatically in response to detecting the indication, causing the video track to be played. This way, playback of a video with audio may be started automatically by the message receiving device.

The indication 203 of the data object 306 may comprise a reference to a remotely hosted object. This object may be hosted by the server system 300 or by another remote host. The message reception system 1 may comprise a data object receive unit 7 arranged for receiving the remotely hosted object from the remote host, such as the server system 300, in response to receiving the message 200 and detecting the indication 203, for playback by the play unit 4.

An instant messaging or voice calling client may comprise implementations of the message reception system 1 and the message transmission system 50, so that messages can be both transmitted and received by the same device and/or user.

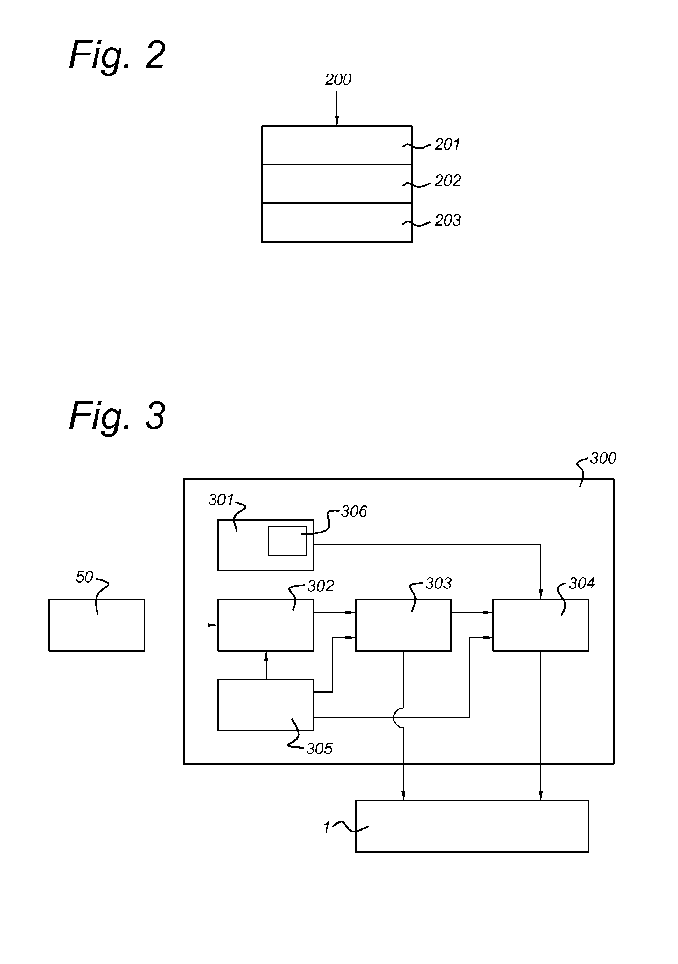

Fig. 2 illustrates a message 200. The message 200 can be an instant message or an SMS message, for example. The message 200 may comprise metadata 201, such as sender identification and/or addressee or destination identification; message text 202 (which is optional); and an indication 203 of a data object comprising an audio track. Moreover, the metadata 201 may comprise an indication of a request to have a voice call or a chat session or to set up another kind of communication channel between the message transmission system 50 and the message reception system 1.

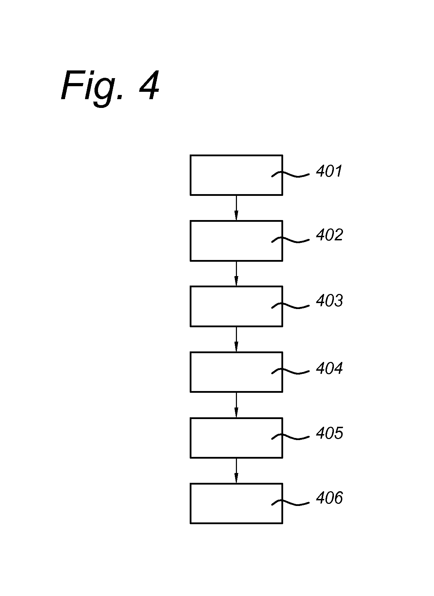

Fig. 4 shows a block diagram of a server system 300 for enabling instant communication between a plurality of users. The server system 300 may comprise one or more server computers, and the functionality of the units may be implemented on different servers or on the same server.

The server system 300 may comprise an audio storage unit 301 for storing a plurality of data objects, wherein a data object 306 comprises an audio track. For example, these data objects are provided by a service provider, or they may be uploaded by individual users.

The server system 300 may comprise a receiving unit 302 for receiving a message 200 from a message transmission system 50 of a user of the plurality of users, wherein the message 200 comprises metadata 201 comprising an identifier of at least one destination user of the plurality of users, and an indication 203 of a data object 306 of the plurality of data objects, wherein the audio track is to be played by a message reception system 1 of the destination user automatically upon receipt of the message 200 by the message reception system 1.

The server system 300 may comprise a forwarding unit 303 for forwarding the message 200 to the message reception system 1. The forwarding unit 303 may be arranged for forwarding the message 200 to the message reception system 1 by transmitting the message, for example using a push protocol, known in the art per se.

The server system 300 may comprise an object transmission unit 304 for transmitting the data object 306 to the message reception system 1. For example, the data object 306 may be streamed to the message reception system 1.

Fig. 4 illustrates a messaging method. To send a message, the method may proceed as follows. The method may comprise step 401 of enabling a user to select a data object comprising an audio track to be played by a message reception system 1 of a destination user upon reception of the message by the message reception system 1. The method may comprise step 402 of generating a message 200 comprising an indication 203 of the data object 306. The method may comprise step 403 of transmitting the message 203 to the message reception system 1 of the destination user via a network.

To receive a message from another user, the method may proceed as follows. The method may comprise step 404 of receiving a message 200 via a network connection. The method may comprise step 405 of detecting an indication 203 of a data object 306 comprising an audio track in the message 200 automatically in response to receiving the message 200. The method may comprise step 406 of causing the audio track to be played automatically in response to detecting the indication 203 in the message 200.

The methods and systems described herein may be implemented at least partly by means of software.

The techniques described herein may be used to provide a method or system for streaming audible content via an instant messaging application. Audible content can manually be selected by a sender and streamed to a receiver without human interaction on the receiver side. The selected audible content can be accompanied by textual messages. The audible content on the receiving side is played instantly via live streaming.

An instant messaging software program may be arranged to reside on both sending as well as a receiving computing devices. A central server with a database of audible content with unique references and a database of registered subscribers with unique identification codes may be provided. When a message is sent by a subscriber to another subscriber, this message may be detected on the central server and/or on the receiving computing device. The central server may be arranged for checking whether a unique identification code, representative for the sending subscriber, is registered in a database. Additionally, the central server may be arranged for checking whether a unique identification code representative for the receiving subscriber is registered in a database. If these identification codes have been checked successfully, the central server may be arranged to detect a reference to audible content in the message. This detection may also be performed on the receiving computing device. The instant message may be pushed to the receiving computing device. This pushing may be the task of the central server. Alternatively, the message is transmitted directly from the transmitting device to the receiving device.

The receiving computing device may be arranged for receiving the message from the central server (or from the transmitting device) and reading from the message the audible content reference and requesting the streaming of the audible content.

The central server establishes an outbound connection to the receiving computing device, and the central server streams the audible content to the receiving computing device over the outbound connection. Alternatively, different servers may be used for the message handling/forwarding and for the streaming.

Fig. 1 schematically shows a system for streaming audible content from a sender's computing device to a receiver's computing device via an instant messaging application, without human interaction on the receiver's computing device.

This system may be used to support a scenario as follows.
1. Sender opens an instant messaging software application residing on a computing device.
2. Sender selects a receiver's contact name, which is registered in the Server System Subscriber Database.
3. Sender initiates a message - with or without text - to the selected receiver's contact name. This contact name can be, for example, an email address, a user identifier, a numeric value, or an alias.
4. Sender selects an audible content item from a catalogue of available audible content items, wherein the selected audible content item is associated with a Unique Identification Code.
5. Sender triggers the sending of the message by pressing a send button.
6. The sender's computing device connects or is already connected to the Server System.
7. If a connection is established, the instant messaging software application starts transmitting the message and the data it contains (text and a Unique Identification Code for the audible content) to the Server System.
8. The Server System checks whether the receiver contact's contact name provided in the message exists in the Server System Subscriber Database.
   b. The original Sender's message is now relayed to the Receiver's Computing Device.
   c. If a Unique Identification Code for audible content is received by the Receiver's Computing Device, the Receiver's Computing Device requests the Server System for opening a connection, for example a pipe, from the Server System to the Receiver's Computing Device.
   d. The Server System opens the connection, such as the pipe, to the Receiver's Computing Device.
   e. The Server System identifies the Unique Identification Code for audible content.
   f. The Central Communication Server streams the audible content live to the Receiver's Computing Device.

The techniques described herein may be applied to different kinds of communication technology. Moreover, the techniques may be employed also when a receiver's communication application is running in a background mode, or when the receiver's communication device is operating in a stand-by or idle mode.

Examples of communication technology that may be used to transmit the messages using the techniques described herein:
1. Instant messaging
2. SMS: SMS application running on receiver and transmitter devices may be adapted to include the features described herein.
3. USSD: unstructured supplementary services data. This is a protocol that is used in mobile telephony. It is a different protocol for sending messages to a receivers phone. The techniques described herein in respect of instant messaging may also be applied to USSD or SMS.
4. Voice calling, using mobile telephony network and/or a voice-over-IP protocol.
5. Emergency notifications or bulk advertising: a selected sound may be transmitted to a group of users who are selected based on a set of criteria, such as appearance in a mailing list or geographic location.

The receiver hears a sound (it's automatically being played) automatically without him or her have to do or press anything. Optionally, the sound doesn't have to be stored in his own phone in order to hear the particular sound, because it can be streamed from a remote server system.

The above method steps can also be performed in a different order. For example, the user may first enter an optional text message, and then select a sound track to accompany the message.

In a voice calling application, the user may be enabled to select a contact and an audio track. When the user presses the 'dial' button, the message is transmitted, optionally via the server system, to the recipient device that is arranged for playing the audio track to notify the receiving user of the incoming call.

It is possible that the sending system comprises an audio recorder arranged for recording a voice message captured by a microphone operatively connected to the system. Alternatively, any audio file which has been recorded by sender or that is stored on the transmitting system can be made available for selection by the user, to be played at the receiving system. For example, the transmitting system may be arranged for uploading the audio file to the server system. The server system or the transmitting system may include a reference to the audio file into the message, and the receiving system may be arranged for extracting the reference and streaming that audio file from the server system.

The techniques described herein can also be applied to media content and/or a combination of audio and other media content. In this case, a picture or film may be instantly displayed on the receiver's phone, without receiver having to do anything. This could also be combined with audio, where both audio file and media content or both being played/displayed instantly.

The techniques described herein may be used in a mobile advertising tool. Another example application is to enable a user to send a holiday picture with a sound bite which are instantly reproduced at the receiver's side.

The police, governmental institutes, advertising companies may be enabled by means of a transmitting system to send a notification to a group of people (selected based on geographic location and/or demographics, or other criteria) using any of the described communication technologies. The message may include an indication of a data object including an audio track, as described herein. This audio track may be instantly played and/or showed to receivers mobile device or other computing device.

Some or all aspects of the invention may be suitable for being implemented in form of software, in particular a computer program product. Such computer program product may comprise a storage media on which the software is stored. Such a storage media may comprise, for example, an optical disc, magnetic disk, or flash memory. Also, the computer program may be represented by a signal, such as an optic signal or an electro-magnetic signal, carried by a transmission medium such as an optic fiber cable or the air. The computer program may partly or entirely have the form of source code, object code, or pseudo code, suitable for being executed by a computer system. For example, the code may be directly executable by one or more processors. Alternatively, the code may be interpreted by an interpreter that is executed by one or more processors. It will be understood that portions of the systems described herein may be implemented in form of software. Moreover, the method steps described herein may be implemented partially or completely in software. The software may be organized by means of subroutines. The subroutines may be combined to form a standalone executable program. Alternatively, the subroutines may be organized as a dynamically linkable library. A main program executable file may be provided that uses the subroutines from the dynamically linkable library. Each of the processing steps and/or system components described herein may be represented by executable code, be it in a dynamically linked library or in an executable file. Some, or all, of the functionality may be implemented as part of an operating system, some functionality may be implemented in a dynamically linked library, and some functionality may be implemented as an application program file.

The examples and embodiments described herein serve to illustrate rather than limit the invention. The person skilled in the art will be able to design alternative embodiments without departing from the scope of the claims. Reference signs placed in parentheses in the claims shall not be interpreted to limit the scope of the claims. Items described as separate entities in the claims or the description may be implemented as a single hardware or software item combining the features of the items described.

## Claims

1. A message reception system (1) for alerting a user of an incoming message from another user, comprising
a message receiving unit (2) for receiving a message (200) via a network connection;
a detecting unit (3) for detecting an indication (203) of a data object (306) comprising an audio track in the message (200) automatically in response to receiving the message (200); and
a play unit (4) for causing the audio track to be played automatically in response to detecting the indication (203) in the message (200).

2. The system according to claim 1, wherein the message (200) comprises a text message (202) to be presented to a user of the message reception system (1).

3. The system according to claim 2, comprising a message display unit (5) for displaying the text message (202).

4. The system according to claim 2, wherein the play unit (4) is arranged for playing the audio track upon reception of the message (200) and detection of the indication (203), regardless of whether the text message (202) is being displayed at that time.

5. The system according to claim 1, wherein the message represents an incoming call.

6. The system according to claim 1, wherein the play unit (4) is arranged for overriding a stand-by mode or a background mode of the message reception system (1) to play the audio track.

7. The system according to claim 1, wherein the data object (306) further comprises a video track and the play unit (4) is further arranged for, automatically in response to detecting the indication, causing the video track to be played.

8. The system according to claim 1,
wherein the indication (203) of the data object (306) comprises a reference to a remotely hosted object; and
wherein the system (1) comprises a data object receive unit (7) for receiving the remotely hosted object from a remote host (300), in response to receiving the message (200) and detecting the indication (203), for playback by the play unit (4).

9. A message transmission system (50) for sending a message to a message reception system (1), comprising
a selection unit (51) for enabling a user to select a data object comprising an audio track to be played by a message reception system (1) of a destination user upon reception of the message by the message reception system (1);
a message generator (52) for generating a message (200) comprising an indication (203) of the data object (306); and
a transmission unit (53) for transmitting the message (203) to the message reception system (1) of the destination user via a network.

10. The message transmission system (50) of claim 9, comprising a text unit (54) for enabling a user to indicate a text message (202) to be displayed by the message reception system (1), and wherein the message generator (52) is arranged for including the text message (202) in the message (200).

11. The message transmission system (50) of claim 9, comprising a call unit (55) for enabling a user to indicate initiation of a voice and/or video call with the message reception system (1), and wherein the message generator (52) is arranged for including an indication of a call request in the message.

12. The message transmission system (50) of claim 9, wherein the message generator (52) is arranged for including the indication (203) of the data object (306) as a reference to a remotely hosted object (306).

13. The message transmission system (50) of claim 9, wherein the selection unit (51) is arranged for enabling the user to select the data object (306) from a predefined collection (301) of data objects.

14. An instant messaging or voice calling system comprising the message reception system of claim 1 and/or the message transmission system of claim 9.

15. A server system (300) for enabling instant communication between a plurality of users, comprising
an audio storage unit (301) for storing a plurality of data objects, wherein a data object (306) comprises an audio track;
a receiving unit (302) for receiving a message (200) from a user of the plurality of users, wherein the message (200) comprises an indication of at least one destination user of the plurality of users, and an indication (203) of a data object (306) of the plurality of data objects, wherein the audio track is to be played by a message reception system (1) of the destination user automatically upon receipt of the message (200) by the message reception system (1);
a forwarding unit (303) for forwarding the message (200) to the message reception system (1); and
a object transmission unit (304) for transmitting the data object (306) to the message reception system (1).

16. A method of for alerting a user of an incoming message from another user, comprising
receiving (404) a message (200) via a network connection;
detecting (405) an indication (203) of a data object (306) comprising an audio track in the message (200) automatically in response to receiving the message (200); and
causing (406) the audio track to be played automatically in response to detecting the indication (203) in the message (200).

17. A method of sending a message to a message reception system (1), comprising
enabling (401) a user to select a data object comprising an audio track to be played by a message reception system (1) of a destination user upon reception of the message by the message reception system (1);
generating (402) a message (200) comprising an indication (203) of the data object (306); and
transmitting (403) the message (203) to the message reception system (1) of the destination user via a network.

18. A computer program product comprising instructions for causing a processor system to perform the method according to claim 16 or 17.
